# EUROPÄISCHE PATENTSCHRIFT

(11) **EP 2 420 816 B1**
(45) Veröffentlichungstag und Bekanntmachung des Hinweises auf die Patenterteilung: **20.03.2013**
(21) Anmeldenummer: 11169820.5
(22) Anmeldetag: 10.10.2007
(51) Int. Cl.: G01N 3/42

(54) **Vorrichtung zur Bestimmung des Härtegrades von halbfesten Materialien**
Assembly for measuring the hardness of semi-solid materials
Dispositif de détermination du degré de dureté des matériaux semi-solides

(30) Priorität: 17.10.2006 DE 102006049813
(43) Veröffentlichungstag der Anmeldung: 22.02.2012
(62) Teilanmeldung aus: 07821152.1
(73) Patentinhaber: Petrotest Instruments GmbH & Co. KG, 15827 Dahlewitz (DE)
(72) Erfinder: Handschuck, Bernhard, 12305 Berlin (DE); Eilers, Helmut, 15732 Schulzendorf (DE)
(74) Vertreter: Scheffler, Marco

(56) Entgegenhaltungen:
- DE-A1- 10 257 170
- FR-A- 2 823 307
- US-A- 6 142 010

## Beschreibung

Die vorliegende Erfindung betrifft eine Vorrichtung zur Bestimmung des Härtegrades von halbfesten Materialien, insbesondere betrifft die vorliegende Erfindung ein Penetrometer zur Messung des Härtegrades von Straßenbelägen wie Asphalt oder zur Messung des Härtegrades von Schmierstoffen.

Halbfeste Materialien wie Asphalte und/oder Bitumen finden unter Anderem im Straßenbau Anwendung. Asphalte sind bis auf wenige natürliche Vorkommen technisch hergestellte Gemische aus Bitumen und Mineralstoffen. Durch Veränderung der Bindemittel- und Mineralstoffsorten sowie deren Zugabemenge können Asphalte mit unterschiedlichen Eigenschaften, wie z.B. unterschiedlichen Härtegraden für diverse Anforderungsprofile hergestellt werden.

Dabei sollen Asphalte jene Anforderungen erfüllen, die von Auftraggebern, Auftragnehmern, von Verkehrsteilnehmern, Steuerzahlern und von Anwohnern gestellt werden. Dies sind insbesondere Sicherheit und Fahrkomfort, d.h. Ebenheit, Griffigkeit, Helligkeit der Asphaltdecke, Wirtschaftlichkeit, d.h. Haltbarkeit, Risssicherheit, Verformungsbeständigkeit, Alterungs- oder Ermüdungsbeständigkeit, leichte und kurze Instandsetzung, günstige Rohstoffe, Mischung - Einbau und Verdichtung mit üblichen einfachen Methoden und darüber hinaus Lärmminderung.

Das Bitumen im Asphalt unterliegt erheblicher Beanspruchung durch Temperatur und Verkehrsbelastung. Asphaltdecken in heimischen Regionen kühlen in Folge von Salzstreuung im Winter auf -30°C ab und erreichen durch Sonneneinstrahlung im Sommer +50°C. Eine wichtige Kenngröße zur Charakterisierung der Eigenschaften des Bitumens ist der Härtegrad. Weicheres Bitumen neigt im Sommer eher zur Spurrillenbildung, härteres Bitumen neigt im Winter eher zur Rissbildung. Daher ist die genaue Bestimmung des Härtegrades von Bitumen ein wichtiges Mittel zur Qualitätskontrolle.

Zur Härtebestimmung von halbfesten Prüfmaterialien wie Bitumen findet international das Verfahren der Penetration gemäß ASTM D 5, IP 49, DIN EN 1426, früher: DIN 52010 Anwendung. Hierbei dringt ein nach Gewicht und Abmaßen spezifizierter Messkörper - bestehend aus Fallstab und Eindringkörper - für kurze Zeit unter Eigengewicht in das zu untersuchende Material ein. Die hiernach gemessene Eindringtiefe in das Prüfmaterial ist ein Maß für dessen Härte, die sich bei Bitumensorten in der entsprechenden Bezeichnung niederschlägt ("B80" bedeutet hier 80/10 mm Eindringtiefe). Die Vorrichtung zum Positionieren und Auslösen des Messkörpers und zum Messen der Eindringung ins Prüfmaterial wird Penetrometer, das Messverfahren Penetration genannt.

Voraussetzung für die Vergleichbarkeit von Messergebnissen ist die Einhaltung der Spezifikationen und das genaue Positionieren des Messkörpers in der Startposition vor der eigentlichen Penetration. Dies bedeutet, dass der Eindringkörper (z.B. eine Eindringnadel) direkt über der Oberfläche positioniert wird, also im Idealfall genau einen unendlich kleinen Berührungspunkt mit dem zu vermessenden Material aufweist. Diese Startposition wird bei den bekannten Vorrichtungen beispielsweise unter Beobachtung eines Benutzers durch vorsichtiges Absenken des Messkörpers mittels einer Höhenverstellung bis zur Berührung der Eindringkörper-Spitze mit der Prüfmaterial-Oberfläche erreicht. Aus dieser Startposition wird die Penetration durch Freigabe des bis dahin im Penetrometer gehaltenen Messkörpers (bestehend Fallstab und Eindringkörper) gestartet. Dabei dringt der Messkörper in das Prüfmaterial unter Eigengewicht ein. Nach einer vorgegebenen Eindringzeit wird der Messkörper in der neuen Stellung arretiert. Nach ASTM D 5, IP 49, DIN EN 1426 beträgt die Eindringzeit 5 Sekunden. Der Eindringweg bzw. die Eindringtiefe ist das Ergebnis der Penetration und dient als Maß für den zu ermittelnden Härtegrad.

Die erforderliche Einstellung der Startposition ist mit den bekannten Vorrichtungen zwangsläufig mit Fehlern behaftet. Grund dafür ist die manuelle Einstellung der Startposition unter (subjektiver) Beobachtung eines Benutzers. Dabei wird der Messkörper mit einem Handrad abwärts bewegt. Durch die Beobachtung des Benutzers wird dann der Aufsetzpunkt gefunden.

Erschwerend kommt hinzu, dass z.B. nach DIN EN 1426 unter einer Temperierflüssigkeit gemessen wird und damit der Aufsetzpunkt "unter Wasser" gefunden werden muss. Handelt es sich bei dem zu messenden Material um Bitumen, wird das einfallende Licht nur geringfügig reflektiert. Die schlechten Sichtverhältnisse führen zu einer eingeschränkten bzw. verschlechterten Wahrnehmung des Benutzers. Zur Verbesserung der Sichtverhältnisse werden nach dem Stand der Technik beispielsweise Spiegel, Lichtquellen (Lampen) und optische Hilfen verwendet. So können zum Beispiel Lupen und Punktleuchten zur Schattenbildung der sich der Prüfoberfläche nähernden Spitze verwendet werden. Diese gewährleisten jedoch keine exakte Bestimmung des Aufsetzpunktes (Startposition), wodurch die Bestimmung des Härtegrades des zu vermessenden Materials ebenfalls fehlerbehaftet ist.

Ein fehlerhafte Startposition (Aufsetzfehler) wirkt sich auf das Messergebnis zur Bestimmung des Härtegrades aus:
- erreicht die Spitze des Messkörpers die Oberfläche des Prüfmaterials nur scheinbar, d.h. das Aufsetzen wird zu früh gestoppt, dann wird der Messkörper bei der nachfolgenden Penetration durch die zu große Fallhöhe zu tief ins Prüfmaterial eindringen.
- dringt die Spitze des Messkörpers in der Startposition bereits in die Oberfläche des Prüfmaterials ein, d.h. das Aufsetzen wird zu spät gestoppt, dann wird der Messkörper bei der nachfolgenden Penetration zu gering eindringen.

Weiterhin ist aus DE 40 21 178 A1 ein Verfahren zur Bestimmung des Härtegrades von halbfesten Materialien durch Messung der Eindringtiefe eines in das zu untersuchende Material "fallenden Messkörpers" bekannt, wobei der Messkörper mittels eines Elektromotors, einer Hubstange und anderen Elementen zur vertikalen Abwärtsbewegung gebracht wird. Eine Vorabmessung zur Bestimmung des Nullpunktes (Startpunktes), um den Messkörper in eine vordefinierte Startposition (d.h. in eine vordefinierte Fallhöhe) zu bringen, ist nicht beschrieben und auch nicht notwendig, da die Fallhöhe nur unwesentlich zur Eindringkraft des Messkörpers beiträgt. Vielmehr soll der Messkörper knapp über der Probe angeordnet sein, was den Einfluss des Fallweges minimiert.

Darüber hinaus ist aus DE 38 30 815 A1 ein Messverfahren zur Prüfung der Härte eines Prüfkörpers bekannt, bei dem ein Messkörper ebenfalls nicht unter Eigengewicht auf die Probe fällt; vielmehr wird die Probe durch den Messkörper mittels unterschiedlicher Prüfkräfte F1 und F2 beaufschlagt. Dazu ist es vorgesehen, zunächst eine relative hohe Vorlast (bis zu 20 %) der Prüflast aufzubringen und nach Aufbringen der Vorlast den Nullpunkt über Extrapolation mathematisch zu ermitteln. Ein Aufbringen einer solchen Prüflast würde jedoch zu einer Verfälschung des Messergebnisses bei der Messung des Härtegrades von halbfesten Materialien führen.

Darüber hinaus ist aus DE 102 57 170 B4 ein Verfahren zur Bestimmung des Härtegrades von halbfesten Materialien bekannt, bei dem vor der eigentlichen Messung des Härtegrades der mit einem Kraft-Weg-Sensor verbundene Messkörper derart in das zu vermessende Material abgesenkt wird, dass das zu untersuchende Material beim ersten Aufsetzen des mit dem Sensor verbundenen Messkörpers lediglich eine elastische Verformung erfährt, mittels mindestens zweier Kraft-Weg-Messwerte des Sensors die exakte Startposition für den Messkörper über oder auf dem zu vermessenden Material bestimmt und danach der Messkörper auf diese Startposition eingestellt wird. Durch dieses Verfahren wird ein automatischer Aufsetzvorgang ermöglicht, wodurch subjektive Aufsetzfehler eliminiert werden können. Nachteilig ist jedoch die relativ große Masse, die auf den Kraft-Weg-Sensor wirkt, was zu einer großen Empfindlichkeit gegenüber Störungen, wie Vibration etc. führt.

Es ist daher Aufgabe der vorliegenden Erfindung, eine Vorrichtung anzugeben, mit welcher der Härtegrad von halbfesten Prüfmaterialien gegenüber dem Stand der Technik mit hoher Genauigkeit bei gleichzeitig geringerer Empfindlichkeit gegenüber elektronischen und/oder mechanischen Störungen bestimmt werden kann.

Diese Aufgabe wird erfindungsgemäß gelöst durch die Merkmale im kennzeichnenden Teil des Anspruchs 1 (Vorrichtungsanspruch) im Zusammenwirken mit den Merkmalen im jeweiligen Oberbegriff. Zweckmäßige Ausgestaltungen der Erfindung sind in den Unteransprüchen enthalten.

Ein besonderer Vorteil der vorliegenden Erfindung besteht darin, dass mit der erfindungsgemäßen Vorrichtung der Härtegrad von halbfesten Prüfmaterialien erheblich zuverlässiger und einfacher als nach dem Stand der Technik (DE 102 57 170 B4) bestimmt werden kann.

Das Penetrometer kann einen Messkörper, einen Kraft-Weg-Sensor, ein Mittel zur vertikalen Bewegung des Messkörpers und eine Einheit zur Auswertung der Messwerte des Kraft-/Wegsensors und zur Steuerung des Mittels zur vertikalen Bewegung des Messkörpers aufweisen, wobei der Messkörper einen Fallstab und einen Eindringkörper (Eindringnadel) aufweist und durch eine Fallstab-Arretierung gehalten ist, wobei die Fallstab-Arretierung über dem zu vermessenden Material abgestützt ist, und wobei der Kraft-/Wegsensor mit dem Messkörper verbunden ist und die Auswerte- und Steuereinheit sowohl zum Kraft-/Wegsensor als auch zum Mittel zur vertikalen Bewegung des Messkörpers eine Datenübertragung aufweist, wobei die Einheit zur Auswertung der Messwerte des Kraft-/Wegsensors und zur Steuerung des Mittels zur vertikalen Bewegung des Messkörpers ein Mittel zur Bestimmung eines bereinigten Kraftmesswerts für eine Vielzahl von Messzeitpunkten (vorzugsweise mehr als zehn, jedoch mindestens zwei) und ein Mittel zur Bestimmung der Kraftdifferenz zwischen dem bereinigten Kraftmesswert und dem zum jeweiligen Zeitpunkt gemessenen Kraftmesswert aufweist, wobei die Einheit zur Auswertung der Messwerte des Kraft-/Wegsensors und zur Steuerung des Mittels zur vertikalen Bewegung des Messkörpers weiterhin zur Bestimmung eines Nullzeitpunkts ausgebildet ist, für den mindestens eines der folgenden Kriterien i)- iii):
i) ab dem Nullzeitpunkt besitzen die Kraftdifferenzen aufeinanderfolgender Zeitpunkte das gleiche Vorzeichen und die Zeitdifferenz zwischen dem Nullzeitpunkt und einem der aufeinanderfolgenden Zeitpunkte übersteigt eine vorgegebenen Zeitspanne,
ii) ab dem Nullzeitpunkt besitzen die Kraftdifferenzen aufeinanderfolgender Zeitpunkte das gleiche Vorzeichen und die Kraftdifferenz eines dem Nullzeitpunkt nachfolgenden Zeitpunktes übersteigt einen vorgegebenen Kraftwert,
iii) ab dem Nullzeitpunkt besitzen die Kraftdifferenzen aufeinanderfolgender Zeitpunkte das gleiche Vorzeichen und die Wegdifferenz zwischen dem Nullzeitpunkt und einem der aufeinanderfolgenden Zeitpunkte übersteigt eine vorgegebene Weglänge,
erfüllt ist.

Vorzugsweise ist die Einheit zur Auswertung der Messwerte des Kraft-/Wegsensors und zur Steuerung des Mittels zur vertikalen Bewegung des Messkörpers derart ausgebildet, dass die Position des Messkörpers zum Nullzeitpunkt als exakte Startposition der Oberfläche des zu vermessenden Materials verwendet und der Messkörper vor der eigentlichen Messung des Härtegrades auf diese Startposition eingestellt wird.

Vorzugsweise wird zur Ermittlung des bereinigten Kraftmesswertes ein Zeitintervall nach Beginn des Absenkens des Messkörpers bis zum Erreichen des Umkehrpunktes in eine Vielzahl von Messzeitpunkte unterteilt, wobei für eine vorgegebene Anzahl von aufeinanderfolgenden Zeitpunkten, während derer sich der Messkörper über dem zu vermessenden Material befindet, die jeweiligen Kraftmesswerte gemessen und daraus ein bereinigter Kraftmesswert als mathematisches Mittel der gemessenen Kraftmesswerte gebildet wird. Vorzugsweise wird die Ermittlung des bereinigten Kraftmesswertes zusätzlich unter Berücksichtigung der Absenkgeschwindigkeit des Messkörpers vorgenommen.

Vorzugsweise sind die Zeitspanne, der Kraftwert und/oder die Weglänge für die Abbruchskriterien i)- iii) in Abhängigkeit des zu untersuchenden Materials und/oder der Geräteparameter voreingestellt. Vorzugsweise ist die Einheit zur Auswertung der Messwerte des Kraft-/Wegsensors und zur Steuerung des Mittels zur vertikalen Bewegung des Messkörpers derart ausgebildet, dass zur Bestimmung des Nullzeitpunkts sowohl das Kriterium ii) als auch gleichzeitig mindestens eines der Kriterien i)und iii) erfüllt sind. Besonders bevorzugt sind gleichzeitig sämtliche Kriterien i)- iii) erfüllt.

Vorzugsweise ist der Kraft-/Wegsensor innerhalb des Fallstabs angeordnet ist. Dadurch können vorteilhafterweise unerwünschte Massen, die auf den Kraftsensor einwirken, reduziert werden.

Vorzugsweise ist der Kraft-/Wegsensor im unteren Bereich des Fallstabs, besonders bevorzugt unmittelbar oberhalb einer Einspannung für den Eindringkörper, angeordnet. Der Eindringkörper ist vorzugsweise als Eindringnadel ausgebildet.

Die für den Kraft-/Wegsensor erforderliche Versorgung bzw. für das daraus resultierende Messsignal der Oberflächenberührung kann über elektrische Kontakte oder kontaktlos bei Verwendung elektromagnetischer Wellen an die allgemeine Steuerung der Apparatur (Auswerte- und Steuereinheit) übertragen werden. Dieser Signalaustausch darf den anschließenden Eindringvorgang der eigentlichen Eindringprüfung durch unerwünschte Reibung nicht stören, weshalb die Kontaktierung vorzugsweise nach dem Aufsetzvorgang - aber vor der Eindringprüfung (automatisch) - wegschwenkt.

Dazu weist der Kraft-/Wegsensor zur Datenübertragung vorzugsweise einen ersten elektrischen Kontakt und die Auswerte- und Steuereinheit einen zweiten elektrischen Kontakt auf, wobei die elektrischen Kontakte seitlich nebeneinander angeordnet sind und der zweite elektrische Kontakt der Auswerte- und Steuereinheit zur Kontaktierung und Dekontaktierung des ersten elektrischen Kontakts mit einem Mittel zur horizontalen Bewegung des zweiten elektrischen Kontaktes der Auswerte- und Steuereinheit verbunden ist. Vorzugsweise ist der zweite elektrische Kontakt der Auswerte- und Steuereinheit an einem schwenkbaren Ausleger angeordnet, wobei der Ausleger durch eine Schwenkbewegung eine Kontaktierung bzw. Dekontaktierung des ersten elektrischen Kontakts realisieren kann.

Nach einer alternativen, bevorzugten Ausgestaltung des erfindungsgemäßen Penetrometers sind Mittel zur drahtlosen Datenübertragung zwischen Kraft-/Wegsensor und Auswerte- und Steuereinheit und/oder zwischen Auswerte- und Steuereinheit und dem Mittel zur vertikalen Bewegung des Messkörpers vorgesehen. Vorzugsweise weist das Mittel zur drahtlosen Datenübertragung zwischen Kraft-/Wegsensor und Auswerte- und Steuereinheit einen Transponder auf, wobei der Transponder im Kraft-/Wegsensor integriert ist oder wobei der Transponder im Fallstab integriert und mit dem Kraft-/Wegsensor verbunden ist.

Vorzugsweise ist das Mittel zur vertikalen Bewegung des Messkörpers ein Schrittmotor. Vorzugsweise ist die Auswerte- und Steuereinheit durch ein Datenverarbeitungsgerät oder durch mehrere, separate Module ausgebildet.

Die Erfindung soll nachstehend anhand eines zumindest teilweise in den Figuren dargestellten Ausführungsbeispiels erläutert werden. Es zeigen:
- Fig. 1:: ein Penetrometer nach dem Stand der Technik,
- Fig. 2:: eine schematische Darstellung eines Messkörpers mit integriertem Kraft-/Wegsensor eines erfindungsgemäßen Penetrometers,
- Fig. 3:: ein Diagramm, welches die am Kraft-/Wegsensor gemessenen Kraftdifferenzen in Abhängigkeit der Zeit sowie die Werte eines Zeitzählers darstellt, wobei als Abbruchskriterium eine vorgegebene Zeitspanne des Zeitzählers von 20 ms verwendet wird,
- Fig. 4:: ein Diagramm, welches die am Kraft-/Wegsensor gemessenen Kraftdifferenzen in Abhängigkeit des Verfahrweges des Messkörpers sowie die Werte eines Wegzählers darstellt, wobei als Abbruchskriterium ein vorgegebener Verfahrweg des Wegzählers von 0,2 mm verwendet wird, und
- Fig. 5:: ein Diagramm, welches die am Kraft-/Wegsensor gemessenen Kraftdifferenzen in Abhängigkeit des Verfahrweges des Messkörpers sowie die Werte eines Wegzählers darstellt, wobei als Abbruchskriterium eine vorgegebene Kraftdifferenz des Kraft-/Wegsensors von ΔFₖᵣᵢₜ verwendet wird.

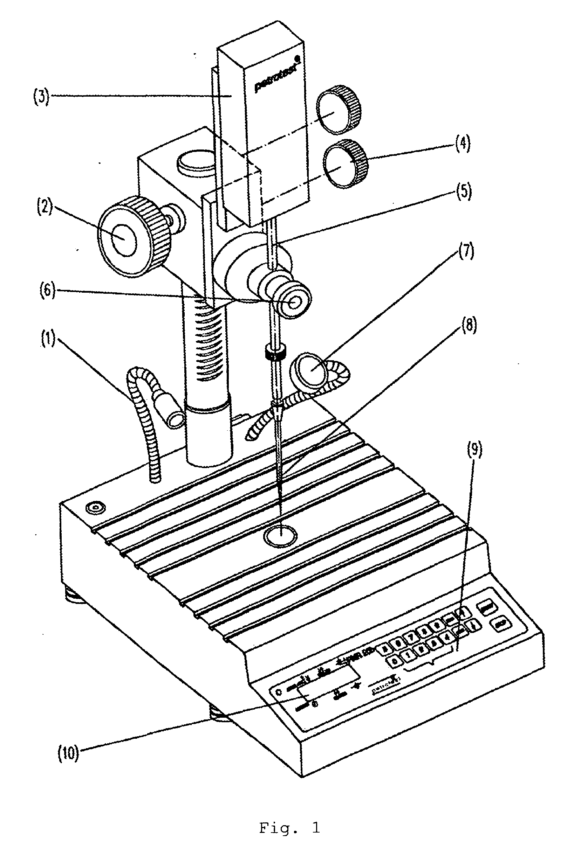

Fig.1 zeigt ein Penetrometer für die Bestimmung des Härtegrades von halbfestem Material nach dem Stand der Technik. Das Penetrometer wird zur Messung über dem zu vermessenen Prüfmaterial aufgestellt. Als halbfeste Materialien kommen insbesondere Erdölprodukte, wie z.B. Bitumen in Betracht.

Andere halbfeste Materialien können aber zum Beispiel Produkte der Lebensmittelindustrie, der Verpackungsindustrie, der Kosmetikindustrie, der chemischen Industrie und ähnliche Materialien sein. Das Penetrometer verfügt über einen Fallstab 5 mit Eindringkörper 8 (z.B. Nadel), welche in diesem Beispiel für die Bitumenmessung ausgeführt sind. Zur Bestimmung des Härtegrades wird der Fallstab 5 mit dem Eindringkörper 8 mittels der Handräder 2,4 zum Aufsetzen auf die Oberfläche des zu vermessenden Prüfmaterials abwärts bewegt, bis die Spitze des Eindringkörpers 8 das Prüfmaterial kontaktiert. Diese Position ist die sog. Startposition der Messung. Dabei ist die zu bestimmende Startposition (Aufsetzpunkt) deshalb schwer zu ermitteln, weil einerseits die Sichtverhältnisse im Bereich des Aufsetzpunktes relativ schlecht sind und andererseits die subjektive Betrachtung des Benutzers, der das Gerät bedient, fehlerhaft ist oder zumindest fehlerhaft sein kann. Zur Verbesserung der optischen Verhältnisse verfügt ein Penetrometer nach dem Stand der Technik über eine Lampe 1 und eine Lupe 7. Der Aufsetzpunkt kann mit der vorliegenden Anordnung nicht durch Gegendruck des zu vermessenden Prüfmaterials bestimmt werden, da der Messkörper 5, 8 bereits bei geringen Drücken in das zu vermessende Prüfmaterial eindringen würde, was die Startposition der Messung und damit die nachfolgende Messung selbst verfälschen würde. Diese Messfehler bei der Bestimmung des Härtegrades von halbfestem Prüfmaterial können mit einer erfindungsgemäßen Anordnung eliminiert werden.

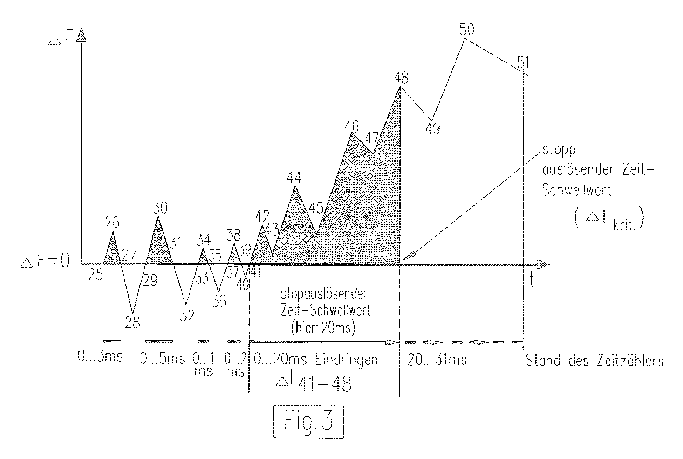

Nach DE 102 57 170 B4 muss die Startposition nicht mehr manuell, sondern kann automatisch eingestellt werden. Gegenüber dem aus DE 102 57 170 B4 bekannten Verfahren lässt sich der Auftreffpunkt des Eindringkörpers mit der erfindungsgemäßen Vorrichtung nach einem bevorzugten Verfahren (Fig. 3-5) über eine Einpunktmessung des Kraft-/Wegsensors 20 erheblich zuverlässiger und einfacher ermitteln. Dabei wird die vom Kraft-/Wegsensor 20 beim Absenken des Messkörpers 5, 8 gemessene Kraft auf Änderungen gegenüber einem bereinigten Kraftmesswert, d.h. gegenüber den zu kompensierenden statischen Einflüssen, wie Gewicht des Messkörpers 5,8 und Offseteinflüssen überwacht (die Kompensation wird z.B. über Kondensatorfilterung im analogen Messsignal erreicht). Sind die Absenkgeschwindigkeit und das Gewicht der abzusenkenden Komponenten bekannt, kann auch ein Referenzwert als bereinigter Kraftmesswert verwendet werden.

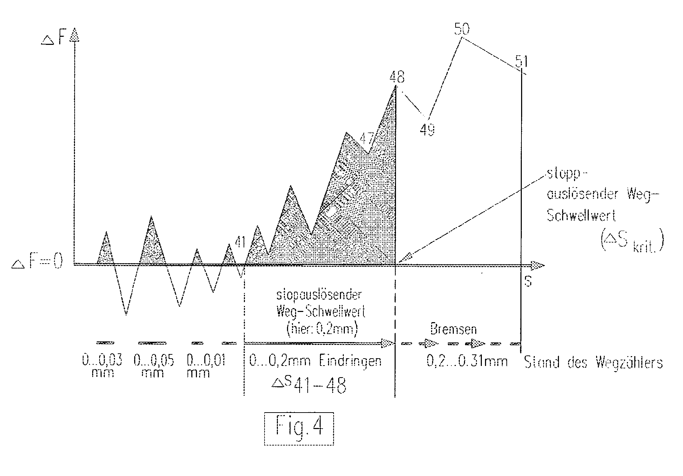

Erhöht sich gemessene Kraft (und damit die ermittelte Kraftdifferenz) bei beispielsweise gleichförmiger Abwärtsbewegung einseitig von der sonst durch die Kompensation vorliegenden Nulllinie (=bereinigter Kraftmesswert) in der Richtung eines aufsetzenden Messkörpers 5, 8, so wird dieser zunächst relativ konstante Wert (der bei Verwendung eines Schrittmotor beispielsweise um die x-Achse pendelt) verlassen. Sobald die ermittelten Kraftdifferenzen einen positiven Wert aufweisen, wird ein bis dahin auf Null gesetzter Zeitzähler gestartet (Fig. 3). Dieser Zeitzähler misst diejenige Zeit, in der die ermittelten Kraftdifferenzen (Abweichungen der gemessenen Kraftwerte vom bereinigten Kraftmesswert) positive Werte (einschließlich Null) aufweisen, also beispielsweise in den Zeitintervallen t₂₅-₂₇, t₂₉₋₃₁ und t₃₇₋₃₉ in Fig. 3. Nehmen die ermittelten Kraftdifferenzen negative Werte an, wird der Zeitzähler zurückgesetzt (auf Null) und wird erst wieder gestartet, wenn die ermittelten Kraftdifferenzen wieder positive Werte annehmen. Im unteren Teil der Fig. 3 sind die Werte des Zeitzählers schematisch dargestellt: eine durchgezogene Linie bedeutet, dass der Zeitzähler gestartet wurde und die Zeit misst. Bei fehlender Linie (negative Kraftdifferenzen) befindet sich der Zeitzähler im zurückgesetzten Zustand (Wert des Zeitzählers ist dann Null). Die Länge der einzelnen Linien stellt schematisch die Maximalwerte des Zeitzählers vor der jeweiligen Rücksetzung dar. Am Punkt 25 beginnt eine Zeit- und Wegzählung analog zum Schlittenantrieb des absinkenden Sensors 20. Der Wegzähler läuft hoch bis zum Punkt 27 und ermittelt dabei schließlich einen Wert von z.B. 0,03 mm (Fig. 4), d.h. der Sensor 20 hat von 25 bis 27 eine Distanz von 0,03 mm zurückgelegt. Am Punkt 27 wird diese Zählung gestoppt und gleichzeitig wieder auf 0 mm (und analog der Zeitzähler in Fig. 3 auf 0s) zurückgesetzt, da die Kraftwertdifferenzen jetzt in den Negativbereich gehen. Da die Kraftdifferenzwerte nun bis Punkt 29 unter Null liegen, wird der Zähler weiter in Nullstellung verbleiben. Die negativen Kraftdifferenzwerte deuten darauf hin, dass es sich bei den vorangehenden positiven Kraftdifferenzwerten um nur eine Störung handelte, die daher im Nachhinein als nicht gültig bewertet und damit verworfen wird. Ein Auftreffen des Messkörpers würde dagegen über den Sensor ein dauerhaftes positives Signal erzeugen. Ab Punkt 29 wiederholt sich der Vorgang in der Weise, dass der Wegzähler erneut eine Distanz bis zum Punkt 31 ermittelt, hiernach jedoch wieder erneut zurückgesetzt wird - also eine erneute Störung.

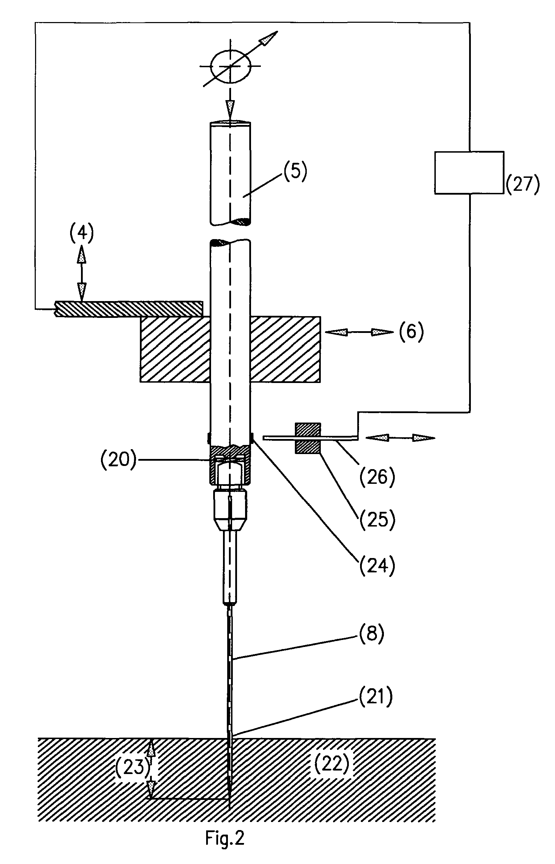

Sobald der Messkörper 5, 8 während des Absenkens die Oberfläche 21 des zu vermessenden Materials 22 (Fig. 2) kontaktiert (im vorliegenden Beispiel im Zeitpunkt t₄₁), wird die Zeit (und/oder der weitere Weg mittels eines Wegzählers z.B. mittels Kodierscheibe/ Impulszähler-Kombination) durch den Zeitzähler registriert. Bleiben nun die Kraftdifferenzen in beliebigen Werten, aber in der gleichen Richtung wirkend kontinuierlich weiter bestehen, wird im Zeitpunkt t₄₈ das Abbruchkriterium - nämlich, dass der Zeitzähler einen vorgegebenen Wert (hier 20 ms) erreicht bzw. überschreitet - erfüllt. In diesem Moment wird ein Bremsvorgang (Strecke 48 nach 51), sowie die nachfolgende Rückstellung eingeleitet und der Messkörper wird auf diejenige Position (s₄₁) (=exakter Aufsetzpunkt) zurückgesetzt, bei welcher der Zeitzähler zuletzt (t₄₁) gestartet wurde. Dann kann die eigentliche Messung des Härtegrades erfolgen.

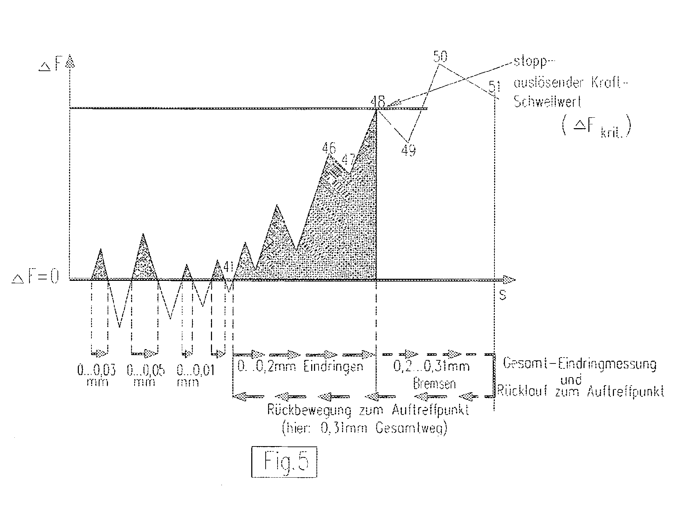

Im vorliegenden Beispiel liegt der exakte Aufsetzpunkt im Punkt 41. Dort beginnt eine weitere Zeit-/Wegzählung, die aufgrund der weiter steigenden Kraft nicht mehr unter Null zurückpendelt, d.h. die Zeit-/Wegzählung wird also nicht mehr zurückgesetzt. Am Punkt 48 erreicht die Zeit (Fig. 3), der Weg (Fig. 4) und/oder die Kraftdifferenz (Fig. 5) einen vorgegebenen Schwellwert, der in jedem Fall die Abwärtsbewegung des Schlittens schnellstmöglich stoppt (ein Störsignal dieser Größe würde also ebenfalls diese Bewegung stoppen). Der von 41 bis 48 ermittelte Weg ist z.B. 0,20 mm. Der Schlitten läuft aufgrund seiner Trägheit noch einen gewissen Weg bis zum absoluten Stillstand (= Punkt 51) nach. Der dabei zurückgelegte Weg ist nochmals z.B. 0,11 mm. Im Wegzähler ist die volle Distanz von 41 bis 51, also hier 0,20mm + 0,11 mm = 0,31 mm gespeichert. Der Schlitten muss nun hier um die Distanz 0,31 mm zurückfahren, um zum ersten registrierten Auftreffen (exakter Aufsetzpunkt 41) zurückzukehren. Bei dieser Auswertung werden also alle vorhergehenden Distanzzählungen als ungültig verworfen; nur die Wegzählung des ununterbrochen positiven Kraftsignals bis zum Abbruchkriterium (Zeit-, Weg- oder Kraftdifferenzschwelle) wird für die Ermittlung der Wegstrecke für das dann erforderliche Zurückfahren zum Auftreffpunkt herangezogen.

Hierdurch können vorteilhafterweise elektronische und/oder mechanische Störungen (beispielsweise die durch einen Schrittmotor verursachten positiven und negativen Beschleunigungen während des Absenkvorgangs, die sich durch oszillierende Kraftdifferenzen (z.B. ΔF₄₂₋₄₈ bemerkbar machen) eliminiert werden bzw. weist das bevorzugte Verfahren eine geringe Empfindlichkeit gegenüber solchen Störungen auf. Die Auswahl des Abbruchkriteriums kann unter Berücksichtigung des zu vermessenden Materials und der verwendeten Geräte-Parameter (Gewicht des Messkörpers etc.) erfolgen.

Anstatt einer vorgegebenen Zeitspanne als Abbruchkriterium (Fig. 3) kann alternativ (siehe Fig. 5) ein vorgegebener Kraftdifferenzwert OFₖᵣᵢₜ (oder ein Weg - Fig. 4) verwendet werden. Dieser Kraftdifferenzwert ΔFₖᵣᵢₜ hat keinen Einfluss auf die genaue Bestimmung des exakten Aufsetzpunktes, da der Aufsetzpunkt bereits durch Verlassen der Nullkraftlinie entweder durch einen Zeitzähler (Fig. 3) und/oder durch einen Wegzähler (Fig. 4 und 5) "vorgemerkt" wird. Durch die Logik der Zeitbegrenzung (Fig. 3) und/oder Wegbegrenzung (Fig. 4) nach Verlassen der Nullkraftlinie (F_{Ber}) wird lediglich ein zu tiefes Eindringen des Messkörpers 5, 8 in das Material 22 verhindert, was sonst durch Kraterbildung das Ergebnis des nachfolgenden eigentlichen Messvorganges (Penetration) negativ beeinflussen würde. Die Zeitspanne bis zum Bremsvorgang wird daher sinnvoll in Abhängigkeit von Geräte- und Materialeigenschaften vor der Messung festgelegt (Bremsverzögerung). Ein Vorteil dieses Verfahrens liegt darin, dass unerwünschte elektronische oder mechanische Störungen in viel geringerem Maße Fehlmessungen verursachen können, als dieses bei bekannten Methoden der Fall ist. Dabei wird berücksichtigt, dass Störsignale mehr oder weniger kurze periodische Nulldurchgänge aufweisen, die innerhalb einer kritischen Restzeit bei jedem Nulldurchgang den mitlaufenden Wegzähler (oder Zeitzähler) zurücksetzen und erneut starten und damit keinen Bremsvorgang einleiten. Erst nach Überschreitung einer kritischen Zeit (Fig. 3), eines kritischen Weges (Fig. 4) und/oder einer kritischen Kraftdifferenz (Fig. 5) beginnt der Bremsvorgang und der vom Zählbeginn bis Stillstand registrierte Weg (S₄₁₋₅₁) wird zum Rückfahren in die exakte Startposition (S₄₁, 21) genutzt.

Ein weiterer Vorteil in dieser Anordnung besteht darin, dass nur einmal eine Kraftmessung für die exakte Startposition herangezogen wird und damit Störungen auch nur einmal einwirken können. Eine weitere Verbesserung wird dadurch erzielt, dass kein sonst gegen Störungen erforderlicher Sicherheits-Schwellwert für die Bremsauslösung erforderlich ist, sondern dass die Messgenauigkeit in Abhängigkeit dieser Störungen automatisch optimiert wird.

In Fig. 2 ist ein Messkörper 5, 8 mit integriertem Kraft-/Wegsensor 20 eines erfindungsgemäßen Penetrometers schematisch dargestellt. Aufgrund der Integration des Kraft-/Wegsensors 20 in den Fallstab 5 können unerwünschte Massen, die auf den Kraft-/Wegsensor 20 einwirken, reduziert werden. Der Fallstab 5 (in dem die Eindringnadel 8 gehalten ist) wird über die Fallstab - Arretierung 6 gehalten, wobei die Fallstab - Arretierung 6 in bekannter Weise über dem zu vermessenden Material abgestützt ist (hier nicht dargestellt). Die vertikale Position des Messkörpers 5, 8 wird über den Schrittmotor 4 gesteuert, der mit der Auswerte- und Steuereinheit 27 verbunden ist. Zwischen Auswerte- und Steuereinheit 27 und Kraft-/Wegsensor 20 besteht eine drahtgebundene oder drahtlose Datenübertragung.

Die für den Kraft-/Wegsensor 20 erforderliche Versorgung bzw. für das daraus resultierende Messsignal der Oberflächenberührung wird über elektrische Kontakte 24, 26 (oder alternativ kontaktlos bei Verwendung elektromagnetischer Wellen) an die allgemeine Steuerung 27 der Apparatur übertragen. Dieser Signalaustausch darf den anschließenden Eindringvorgang der eigentlichen Eindringprüfung durch unerwünschte Reibung nicht stören, weshalb die Kontaktierung nach dem Aufsetzvorgang - aber vor der Eindringprüfung (automatisch) - wegschwenkt.

### Bezugszeichenliste

- 1: Punktleuchte
- 2: Grobverstellung
- 3: Sensor zur Wegerfassung
- 4: Schrittmotor/Höhen-Feinverstellung
- 5: Messkörper/Fallstab
- 6: Fallstab - Arretierung
- 7: Lupe
- 8: Messkörper/Eindringnadel
- 9: Bedienfeld
- 10: Anzeige
- 20: Kraft-/Wegsensor
- 21: Exakte Position der Oberfläche des Prüfmaterials
- 22: Zu vermessendes Material/Prüfmaterial
- 23: Eindringtiefe/Penetrationstiefe
- 24: Elektrischer Kontakt des Kraft-/Wegsensors
- 25: Mittel zur horizontalen Bewegung
- 26: Elektrischer Kontakt der Auswerteeinheit
- 27: Auswerte- und Steuereinheit

## Patentansprüche

1. Penetrometer zur Bestimmung des Härtegrades von halbfesten Materialien (22), mit einem Messkörper, einem Kraft-Weg-Sensor (20), einem Mittel zur vertikalen Bewegung des Messkörpers und einer Einheit (27) zur Auswertung der Messwerte des Kraft-/Wegsensors (20) und zur Steuerung des Mittels zur vertikalen Bewegung des Messkörpers, wobei der Messkörper einen Fallstab (5) und einen Eindringkörper (8) aufweist und durch eine Fallstab-Arretierung (6) gehalten ist, wobei die Fallstab-Arretierung (6) über dem zu vermessenden Material (22) abgestützt ist, und wobei der Kraft/Wegsensor (20) mit dem Messkörper verbunden ist und die Auswerte- und Steuereinheit (27) zum Kraft-/Weg-sensor (20) und zum Mittel zur vertikalen Bewegung des Messkörpers eine Datenübertragung aufweist,
**dadurch gekennzeichnet, dass**
der Kraft-/Wegsensor (20) innerhalb des Fallstabs (5) angeordnet ist.

2. Penetrometer nach Anspruch 1,
**dadurch gekennzeichnet, dass**
der Kraft-/Wegsensor (20) im unteren Bereich des Fallstabs (5) angeordnet ist.

3. Penetrometer nach Anspruch 1,
**dadurch gekennzeichnet, dass**
der Kraft-/Wegsensor (20) unmittelbar oberhalb einer Einspannung für den Eindringkörper (8) angeordnet ist.

4. Penetrometer nach einem der vorhergehenden Ansprüche,
**dadurch gekennzeichnet, dass**
der Kraft-/Wegsensor (20) zur Datenübertragung einen ersten elektrischen Kontakt (24) und die Auswerte- und Steuereinheit (27) einen zweiten elektrischen Kontakt (26) aufweist, wobei die elektrischen Kontakte (24, 26) seitlich nebeneinander angeordnet sind und der zweite elektrische Kontakt (26) der Auswerte- und Steuereinheit (27) zur Kontaktierung und Dekontaktierung des ersten elektrischen Kontakts (24) mit einem Mittel zur horizontalen Bewegung des zweiten elektrischen Kontaktes (26) der Auswerte- und Steuereinheit (27) verbunden ist.

5. Penetrometer nach einem der Ansprüche 1 bis 3,
**dadurch gekennzeichnet, dass**
Mittel zur drahtlosen Datenübertragung zwischen Kraft/Wegsensor (20) und Auswerte- und Steuereinheit (27) und/oder zwischen Auswerte- und Steuereinheit (27) und dem Mittel zur vertikalen Bewegung des Messkörpers vorgesehen sind.

6. Penetrometer nach Anspruch 5,
**dadurch gekennzeichnet, dass**
das Mittel zur drahtlosen Datenübertragung zwischen Kraft-/Wegsensor (20) und Auswerte- und Steuereinheit (27) einen Transponder aufweist, wobei der Transponder im Kraft-/Wegsensor (20) integriert ist oder wobei der Transponder im Fallstab (5) integriert und mit dem Kraft-/Wegsensor (20) verbunden ist.

7. Penetrometer nach einem der vorhergehenden Ansprüche,
**dadurch gekennzeichnet, dass**
das Mittel zur vertikalen Bewegung des Messkörpers ein Schrittmotor ist.

8. Penetrometer nach einem der vorhergehenden Ansprüche,
**dadurch gekennzeichnet, dass**
die Auswerte- und Steuereinheit (27) durch ein Datenverarbeitungsgerät ausgebildet ist oder durch mehrere, separate Module ausgebildet ist.

## Claims

1. A penetrometer for measuring the hardness of semisolid materials (22), comprising a measuring element, a force-displacement sensor (20), a means for vertical movement of the measuring element and a unit (27) for evaluating the values measured by the force-displacement sensor (20) and for controlling the means for vertical movement of the measuring element, wherein the measuring element comprises a falling rod (5) and a penetrating element (8) and is held by means of a falling-rod lock (6), wherein the falling-rod lock (6) is supported above the material (22) to be measured, and wherein the force-displacement sensor (20) is connected to the measuring element and the evaluation and control unit (27) transmits data to the force-displacement sensor (20) and to the means for vertical movement of the measuring element,
**characterized in that**
the force-displacement sensor (20) is arranged within the falling rod (5).

2. The penetrometer according to claim 1,
**characterized in that**
the force-displacement sensor (20) is arranged in the lower portion of the falling rod (5).

3. The penetrometer according to claim 1,
**characterized in that**
the force-displacement sensor (20) is arranged immediately above a gripping part for the penetrating element (8).

4. The penetrometer according to any one of the preceding claims,
**characterized in that**
the force-displacement sensor (20) has a first electrical contact (24) for data transmission and the evaluation and control unit (27) has a second electrical contact (26), wherein the electrical contacts (24, 26) are arranged on the side of each other and the second electrical contact (26) of the evaluation and control unit (27) is connected to a means for horizontal movement of said second electrical contact (26) of the evaluation and control unit (27) in order to make contact and interrupt contact with said first electrical contact (24).

5. The penetrometer according to any one of claims 1 to 3,
**characterized in that**
means for wireless data transmission are provided between the force-displacement sensor (20) and the evaluation and control unit (27) and/or between the evaluation and control unit (27) and the means for vertical movement of the measuring element.

6. The penetrometer according to claim 5,
**characterized in that**
the means for wireless data transmission between the force-displacement sensor (20) and the evaluation and control unit (27) comprises a transponder, wherein said transponder is integrated in the force-displacement sensor (20) or wherein said transponder is integrated in the falling rod (5) and connected to the force-displacement sensor (20).

7. The penetrometer according to any one of the preceding claims,
**characterized in that**
the means for vertical movement of the measuring element is a stepping motor.

8. The penetrometer according to any one of the preceding claims,
**characterized in that**
the evaluation and control unit (27) is embodied by a data processing device or embodied by several, separate modules.

## Revendications

1. Pénétromètre pour la détermination du degré de dureté de matériaux semi-solides (22), avec un corps de mesure, un capteur de force et de déplacement (20), un moyen pour le mouvement vertical du corps de mesure et une unité (27) pour l'analyse des valeurs de mesure du capteur de force et de déplacement (20) et pour la commande du moyen pour le mouvement vertical du corps de mesure, le corps de mesure présentant une tige tombante (5) et un corps pénétrant (8), et étant retenu par un arrêt de tige tombante (6), l'arrêt de tige tombante (6) étant supporté sur le matériau (22) à mesurer, et le capteur de force et de déplacement (20) étant raccordé au corps de mesure, et l'unité d'analyse et de commande (27) pour le capteur de force et de déplacement (20) et pour le moyen de mouvement vertical du corps de mesure présentant une transmission de données,
**caractérisé en ce que**
le capteur de force et de déplacement (20) est disposé à l'intérieur de la tige tombante (5).

2. Pénétromètre selon la revendication 1,
**caractérisé en ce que**
le capteur de force et de déplacement (20) est disposé ans la zone inférieure de la tige tombante (5).

3. Pénétromètre selon la revendication 1,
**caractérisé en ce que**
le capteur de force et de déplacement (20) est disposé directement au-dessus d'un serrage pour le corps pénétrant (8).

4. Pénétromètre selon une des revendications précédentes,
**caractérisé en ce que**
le capteur de force et de déplacement (20) présente, pour la transmission de données, un premier contact électrique (24), et **en ce que** l'unité d'analyse et de commande (27) présente un deuxième contact électrique (26), les contacts électriques (24, 26) étant disposés latéralement l'un à côté de l'autre, et le deuxième contact électrique (26) de l'unité d'analyse et de commande (27) pour la mise en contact et hors contact du premier contact électrique (24) étant raccordé à un moyen pour le mouvement horizontal du deuxième contact électrique (26) de l'unité d'analyse et de commande (27).

5. Pénétromètre selon une des revendications 1 à 3,
**caractérisé en ce**
**qu'**il est prévu des moyens pour la transmission de données sans fil entre le capteur de force et de déplacement (20) et l'unité d'analyse et de commande (27) et/ou entre l'unité d'analyse et de commande (27) et le moyen pour le mouvement vertical du corps de mesure.

6. Pénétromètre selon la revendication 5,
**caractérisé en ce que**
le moyen pour la transmission de données sans fil entre le capteur de force et de déplacement (20) et l'unité d'analyse et de commande (27) présente un transpondeur, le transpondeur étant intégré dans le capteur de force et de déplacement (20), ou le transpondeur étant intégré dans la tige tombante (5) et étant raccordé au capteur de force et de déplacement (20).

7. Pénétromètre selon une des revendications précédentes,
**caractérisé en ce que**
le moyen pour le mouvement vertical du corps de mesure est un moteur pas à pas.

8. Pénétromètre selon une des revendications précédentes,
**caractérisé en ce que**
l'unité d'analyse et de commande (27) est constituée d'un appareil de traitement de données ou est constituée de plusieurs modules séparés.
